# EUROPÄISCHE PATENTSCHRIFT

(11) **EP 0 517 029 B1**
(45) Veröffentlichungstag und Bekanntmachung des Hinweises auf die Patenterteilung: **20.12.1995**
(21) Anmeldenummer: 92108399.4
(22) Anmeldetag: 19.05.1992
(51) Int. Cl.: C08G 18/32, C08G 18/10, D06N 3/14, C08G 18/80

(54) **Verfahren zur Herstellung von Beschichtungsmittel für wasserdampfdurchlässige Beschichtungen**
Process for the preparation of coating compositions for water-permeable coatings
Procédé pour la préparation de compositions de revêtement pour des enduits perméables à l'eau

(30) Priorität: 01.06.1991 DE 4118053
(43) Veröffentlichungstag der Anmeldung: 09.12.1992
(73) Patentinhaber: BAYER AG, 51368 Leverkusen (DE)
(72) Erfinder: Pedain, Josef, Dr., W-5000 Köln 80 (DE); Noll, Klaus, Dr., W-5000 Köln 80 (DE); Thoma, Wilhelm, Dr., W-5090 Leverkusen 3 (DE); Schütze, Detlef-Ingo, Dr., W-5000 Köln 80 (DE)

(56) Entgegenhaltungen:
- EP-A- 0 122 554
- EP-A- 0 193 808
- FR-A- 2 258 481

## Beschreibung

Die vorliegende Erfindung betrifft Beschichtungsmittel, die sich zur Herstellung wasserdampfdurchlässiger Beschichtungen eignen. Sie enthalten A. filmbildende Polymere, die gegebenenfalls reaktive Gruppen tragen, B. in A. dispergierte hydrophile Polyadditionsprodukte aus der Reihe Polyurethane, Polyharnstoffe und Polyurethanharnstoffe und gegebenenfalls C. Vernetzer.

Es ist bekannt, wasserdampfdurchlässige Beschichtungen auf Polyurethanbasis herzustellen, wobei man vornehmlich physikalische Prinzipien angewandt hat. Dabei wird das in einem Lösungsmittel gelöste Polyurethan auf ein Substrat oder einen Trennträger schichtförmig aufgebracht und im nassen Zustand in ein Bad geführt, das einen mit dem Lösungsmittel mischbaren Nichtlöser für das Polyurethan enthält. Der Nichtlöser dringt in die Lösungsschicht ein, wo er das Polyurethan allmählich ausfällt. Bei der Trocknung des so entstandenen verfestigten Films hinterlassen das entweichende Lösungsmittel wie auch der Nichtlöser Mikrokanäle, die in der Beschichtung für den Wasserdampftransport zur Verfügung stehen.

In ähnlicher Weise lassen sich nach Beimischung von Pulvern wasserlöslicher Salze zu Polymerlösungen Überzüge erzeugen, aus denen mit Wasser das Salz unter Hinterlassung von Mikrokavitationen ausgewaschen werden kann.

Auch die Perforation von kompakten Polymer-Folien mit Hilfe energiereicher Elektronenstrahlen führt zu laminierbaren Filmen mit hoher Wasserdampfdurchlässigkeit. Diese Methode ist jedoch apparativ sehr aufwendig.

Neuerdings wird eine Variante der Mikroporös-Beschichtung technisch durchgeführt, die ohne die komplizierte Tauchbadtechnologie auskommt, aber im wesentlichen zu gleichen Ergebnissen führt. Bei diesem Verfahren - auch als "Verdampfungskoagulation" bekannt - wird der Lösung des Polymeren in einem niedrig siedenden organischen Lösungsmittel soviel Wasser zugesetzt, daß die resultierende Streichpaste gerade noch stabil und applizierbar ist. Beim Abdunsten entweicht das organische Lösungsmittel zuerst; das sich immer mehr anreichernde Wasser fällt das Polymer wie beim Tauchverfahren aus und entweicht schließlich beim Trocknen unter Hinterlassen einer mikroporösen Struktur in der Folie.

Die Tauchbadverfahren haben ebenso wie die Verdampfungskoagulation den wesentlichen Nachteil, daß Mikrokanäle oder Mikrokavitationen eine Schwächung des wasserdampfdurchlässigen Überzuges bewirken. Das heißt, daß Zugfestigkeit und Abriebbeständigkeit gegenüber einem kompakten Film deutlich abfallen.

Es hat daher nicht an Bemühungen gefehlt, Wasserdampfdurchlässigkeit in einem Überzug nicht nur durch Anwendung physikalischer Methoden, sondern auch auf chemischem Wege zu erzeugen. So ist beispielsweise bereits vorgeschlagen worden, solche Beschichtungen mit Polyurethanen zu erzeugen, die teilweise aus wasserlöslichen oder hydrophilen Aufbaukomponenten bestehen.

So werden in den DE-OS 12 20 384 und 12 26 071 Polyurethan-Beschichtungsmittel beschrieben, deren Polyurethane aus Glykolen, Diisocyanaten und Polyethylenglykolen mit Molekulargewichten um 1000 hergestellt worden sind.

Auch als Diolkomponente in Polyesterpolyolen für Polyurethanelastomere lassen sich Polyethylenglykole verwenden, um, wie aus der japanischen Patentanmeldung 61/009 423 bekannt, wasserdampfdurchlässige Beschichtungen mit angeblich geringer Wasserquellung zu erzeugen.

Ebenfalls wasserdampfdurchlässig sind kompakte Deckstriche auf Verbundstoffen aus textilen Substraten und mikroporösen Beschichtungen, wie sie in der DE-OS 2 020 153 beschrieben werden.

Segmentierte Polyurethanelastomere aus Polyethylenglykolen sind auch aus der EP-A 52 915 bekannt.

Auch andere organische hydrophile Komponenten sind Polyurethanen zugesetzt worden, um wasserdampfdurchlässige Beschichtungen und Verbundmaterialien herzustellen; insbesondere Poly-γ-methylglutamat kann Polyurethanen zugesetzt, in ihnen als Aufbaukomponente verwendet oder ihnen aufgepfropft werden. Aus der Vielzahl der diese Anwendung beschreibenden Literaturstellen seien die DE-OS 1 922 329 und 1 949 060 sowie die japanischen Patentanmeldungen 58/057 420 und 59/036 781 genannt.

Von besonderem technischen Interesse für das Gebiet der wasserdampfdurchlässigen kompakten Beschichtungen sind in jüngster Zeit hauptsächlich Polyurethane, die als Aufbaukomponenten die oben erwähnten Polyethylenglykole enthalten; diese Rohstoffe sind preisgünstig, allgemein verfügbar und technisch gut zugänglich. Auch die daraus erhältlichen Polyurethane und Polyurethanharnstoffe sind im Prinzip gut bekannt. Im Gegensatz zu den weit verbreiteten Polyurethanen und Polyurethanharnstoffen, die als höhermolekulare Diole Polyesterdiole, Polycarbonatdiole oder Polyetherdiole enthalten, sind diese wasseraufnahmefähig, permeabel für Wasserdampf, gelegentlich sogar in Wasser stark quellbar oder löslich. Deshalb werden den die Hydrophile verursachenden Polyethylenglykolen hydrophobe Polyole beigemischt; aus diesen Gemischen lassen sich Polyurethane bzw. Polyurethanharnstoffe herstellen, die als Versuch gewertet werden können, gute Wasserdampfdurchlässigkeit mit guter Resistenz gegen die Einflüsse flüssigen Wassers verbinden.

In der DE-OS 2 702 090 bzw. der US-PS 4 248 756 werden Zweikomponenten-Beschichtungsmittel aus Ketoximblockierten Präpolymerisaten und zweikernigen, cycloaliphatischen Diaminen als Vernetzer mit höchstens 15 Gew.-% Lösungsmittel in der Zubereitung beschrieben. Dabei können die Polyhydroxyverbindungen in den blockierten Präpolymerisaten z.B. Polypropylenoxide, gegebenenfalls auch Ethylenoxideinheiten, eingebaut enthalten.

Blockierte Präpolymerisate, wie sie in der EP-A 100 005 beschrieben werden, aus Polyhydroxyverbindungen, die 20 bis 100 Gew.-%, bevorzugt 40 bis 80 Gew.-% Ethylenoxid-Einheiten enthalten, liefern nach Applikation und Härtung auf textilen Substraten gut wasserdampfdurchlässige Beschichtungen. Die Quellung dieser Schichten in Wasser führt jedoch dazu, daß beim Auflegen diskreter Wassertropfen auf der Schicht pustelartige Quellerscheinungen auftreten. Diese sind für einen textilen oder lederartigen Gebrauchsartikel nicht nur eine ästhetische Störung, sondern ein wesentlicher technischer Mangel.

Die EP-A-431 386 (Stand der Techik nach Art. 54 (3) EPÜ) betrifft eine hitzehärtbare Beschichtungszusammensetzung enthaltend
A) ein durchschnittlich 2-4 Ketoxim-blockierte NCO-Gruppen aufweisendes Präpolymer mit einem durchschnittlichen Molekulargewicht von 500-15 000 auf Basis aliphatischer, cycloaliphatischer und aromatischer Polyisocyanate und einer oder mehrerer Polyhydroxykomponenten, die in der Summe 0-30 Gew.-% Ethylenoxid-Anteil enthalten, wobei bei Verwendung von mehreren Polyhydroxykomponenten der Ethylenoxid-Anteil in einer der Komponenten bis zu 70 Gew.-% betragen kann, und
B) einen Vernetzer der Formel 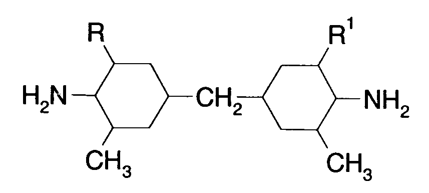 in der R oder R¹ H oder C₁-C₄-Alkyl bezeichnet, wobei das Äquivalentverhältnis von blockierten NCO-Gruppen in A) zu NH₂-Gruppen in B) zwischen 1,35:1 und 0,95:1 liegt,
   wobei mindestens eine der für die Herstellung des Präpolymers verwendeten Polyhydroxyverbindungen in stabiler Dispersion ein Polyurethan und/oder einen Polyurethanharnstoff und/oder einen Polyharnstoff enthält, die praktisch keine freien NCO-Gruppen oder Hydroxylgruppen oder Aminogruppen mehr enthalten und aus aromatischen und/oder aliphatischen und/oder cycloaliphatischen Diisocyanaten und aus Diaminen und/oder Hydrazin und/oder Diolen aufgebaut sind, wobei mindestens eine dieser Komponenten einen hydrophil machenden Rest trägt.

Überraschenderweise wurde gefunden, daß man wasserdampfdurchlässige Beschichtungen mit sehr geringer Wasserquellneigung herstellen kann, wenn man als Beschichtungsmittel an sich hydrophobe Polymere verwendet, die dispergierte hydrophile organische Füllstoffe enthalten. Diese Beschichtungsmittel kann man dadurch erhalten, daß man in einem blockierten NCO-Präpolymerisat oder in einem fertigen Polyurethan oder in einem Polymerisat einen hydrophilen organischen Füllstoff in situ herstellt.

Gegenstand der Erfindung ist ein Verfahren zur Herstellung von Beschichtungsmitteln aus
A) 70 bis 98, vorzugsweise 80 bis 96 Gew.-%,
   a) bezogen auf die Summe (A + B), Polymer, ausgewählt aus der Reihe
      (1) Polymerisat aus ethylenisch ungesättigten Monomeren,
      (2) Polyurethan oder blockiertes NCO-Präpolymerisat und gegebenenfalls
   b) organischem Lösungsmittel,
      wobei die Komponente A keine freien Isocyanatgruppen und keine nennenswerten Mengen solcher Gruppen enthält, die zur Umsetzung mit Komponente B oder ihren Ausgangsprodukten im Reaktionsgemisch befähigt sind, und wobei weiterhin die Viskosität der Komponente A 2000 bis 100 000, vorzugsweise 5000 bis 70 000, insbesondere 10 000 bis 50 000 mPa.s (gemessen bei 23°C) und das Gewichtsverhältnis a:b 100:0 bis 5:95 betragen,
B) 2 bis 30, vorzugsweise 4 bis 20 Gew.-%, bezogen auf die Summe (A + B), in A dispergiertem Polyadditionsprodukt, ausgewählt aus der Reihe (i) Polyurethan, (ii) Polyurethanharnstoff und (iii) Polyharnstoff, wobei die Komponente B praktisch keine freien Isocyanat-, Hydroxyl- und Aminogruppen, aber hydrophile Gruppen, ausgewählt aus ionischen Gruppen und potentiell ionischen Gruppen, in einer Menge entsprechend 0,5 bis 20, vorzugsweise 1 bis 14, Milliäquivalent pro 100 g der Komponente B enthält, und gegebenenfalls
C) Vernetzer,
   dadurch gekennzeichnet, daß man die Komponente B in Komponente A erzeugt.

Für das erfindungsgemäße Verfahren bevorzugte Polymerisate A1 umfassen vor allem fremdvernetzbare hydroxylgruppenhaltige (Meth-)Acrylatharze mit als Zahlenmittel M̅ₙ bestimmten Molekulargewichten von 500 bis 2000, vorzugsweise von 500 bis 1600 und einer durchschnittlichen Funktionalität (pro Molekül) von größer als 1, vorzugsweise größer als 2.

Bevorzugte ethylenisch ungesättigte Monomere für die Herstellung solcher hydroxylgruppenhaltiger (Meth-)Acrylatharze umfassen beispielsweise
I. Hydroxylalkyl(meth)acrylate, und mindestens ein Monomeres aus den Gruppen II bis IV,
II. Styrol und/oder Methylmethacrylat,
III. (Meth)Acrylate und
IV. α,β-monoolefinisch ungesättigte Carbonsäuren.

Besonders bevorzugte (Meth-)Acrylatharze können aus
I. 10 bis 50 Gew.-Teilen eines Hydroxyalkylesters der Acrylsäure oder Methacrylsäure mit 2 bis 4 C-Atomen im Hydroxyalkylrest oder deren Mischungen;
II. 0 bis 80 Gew.-Teilen Styrol, α-Methylstyrol, o-Chlorstyrol, p-Chlorstyrol, o-, m- oder p-Methylstyrol, p-tert.-Butylstyrol oder Methylmethacrylat oder deren Mischungen;
III. 10 bis 90 Gew.-Teilen eines Acrylsäureesters mit 1 bis 12 C-Atomen im Alkoholrest oder eines Methacrylsäureesters mit 2 bis 12 C-Atomen im Alkoholrest oder deren Mischungen;
IV. 0 bis 50 Gew.-Teile einer α,β-monoolefinisch ungesättigten Mono- oder Dicarbonsäure mit 3 bis 5 C-Atomen, oder eines Maleinsäurehalbesters mit 2 bis 14 C-Atomen im Alkoholrest oder deren Mischungen, bzw. deren Umsetzungsprodukte mit einer Monoglycidylverbindung,
wobei die Summe der Gewichtsteile I bis IV 100 beträgt, durch radikalische Copolymerisation in Masse oder in einem organischen Lösungsmittel hergestellt werden.

Zur Herstellung solcher (Meth-)Acrylatharze dienen insbesondere
I. 20 bis 50 Gew.-Teile
   2-Hydroxyethylacrylat,
   2-Hydroxyethylmethacrylat,
   2-Hydroxypropylacrylat,
   2-Hydroxypropylmethacrylat,
   4-Hydroxybutylacrylat oder
   4-Hydroxybutylmethacrylat
   oder deren Mischungen;
II. 30 bis 70 Gew.-Teile
   Styrol oder Methylmethacrylat
   oder deren Mischungen;
III. 9,5 bis 30 Gew.-Teile
   Butylacrylat, Butylmethacrylat,
   2-Ethylhexylacrylat oder
   2-Ethylhexylmethacrylat
   oder deren Mischungen und
IV. 0,5 bis 20 Gew.-Teile
   Acrylsäure, Methacrylsäure oder
   Maleinsäurehalbester mit 4 bis 8 C-Atomen in der Alkoholkomponente oder
I. 25 bis 50 Gew.-Teile
   4-Hydroxybutylacrylat,
   4-Hydroxybutylmethacrylat,
   2-Hydroxyethylacrylat,
   2-Hydroxyethylmethacrylat,
   2-Hydroxypropylacrylat,
   2-Hydroxypropylmethacrylat
   oder deren Mischungen;
III. 40 bis 74,9 Gew.-Teile
   Butylacrylat, Butylmethacrylat,
   2-Ethylhexylacrylat oder
   2-Ethylhexylmethacrylat oder
   deren Mischungen und
IV. 0,1 bis 10 Gew.-Teile
   Acrylsäure, Methacrylsäure oder
   Maleinsäurehalbester mit 4 bis 8
   C-Atomen in der Alkoholkomponente oder
I. 10 bis 30 Gew.-Teile
   2-Hydroxyethylacrylat,
   2-Hydroxyethylmethacrylat,
   2-Hydroxypropylacrylat,
   2-Hydroxypropylmethacrylat,
   4-Hydroxybutylacrylat oder
   4-Hydroxybutylmethacrylat
   oder deren Mischungen;
II. 0 bis 70 Gew.-Teile
   Styrol oder Methylmethacrylat
   oder deren Mischungen;
III. 0 bis 30 Gew.-Teile
   Butylacrylat, Butylmethacrylat,
   2-Ethylhexylacrylat oder
   2-Ethylhexylmethacrylat
   oder deren Mischungen und
IV. 10 bis 50 Gew.-Teile
   Umsetzungsprodukt von
   Monoglycidylverbindungen mit
   Acrylsäure, Methacrylsäure oder
   Maleinsäurehalbestern mit 4 bis 8
   C-Atomen in der Alkoholkomponente oder deren Mischungen,
wobei die Summe der Gewichtsteile I bis IV jeweils 100 beträgt.

Solche (Meth-)Acrylatharze besitzen in der Regel einen Hydroxylgruppengehalt von 2 bis 7,5 Gew.-%. Sie sind beispielsweise in der DE-OS 24 60 329 beschrieben.

Die Polyurethane (A2) können auf an sich bekannte Weise in der Schmelze oder - vorzugsweise - in einem organischen Lösungsmittel hergestellt werden, und zwar sowohl nach dem sogenannten one-shot-Verfahren als auch über ein NCO-Präpolymerisat. Bei der letztgenannten Variante sind die NCO-Gruppen des Präpolymerisats blockiert; die deblockierten (also freien) Isocyanatgruppen können mit geeigneten Kettenverlängerungsmitteln, vorzugsweise Polyaminen, reagieren.

Für den Aufbau dieser Polyurethane (A2) einschließlich der erwähnten Präpolymerisate werden Polyisocyanate der Formel Q(NCO)₂ eingesetzt, wobei Q für einen aliphatischen Kohlenwasserstoffrest mit 4 bis 12 Kohlenstoffatomen, einen cycloaliphatischen Kohlenwasserstoffrest mit 6 bis 15 Kohlenstoffatomen, einen aromatischen Kohlenwasserstoffrest mit 6 bis 15 Kohlenstoffatomen oder einen araliphatischen Kohlenwasserstoffrest mit 7 bis 15 Kohlenstoffatomen steht. Beispiele derartiger bevorzugt einzusetzender Diisocyanate sind
Tetramethylendiisocyanat,
Hexamethylendiisocyanat,
Dodecamethylendiisocyanat,
1,4-Diisocyanatocyclohexan,
1-Isocyanato-3,3,5-trimethyl-5-isocyanatomethylcyclohexan,
4,4'-Diisocyanatodicyclohexylmethan,
4,4'-Diisocyanato-dicyclohexylpropan-(2,2),
1,4-Diisocyanatobenzol,
2,4- und 2,6-Diisocyanatotoluol,
2,4'- und 4,4'-Diisocyanatodiphenylmethan,
4,4'-Diisocyanato-diphenylpropan-(2,2),
p-Xylylen-diisocyanat oder
α,α,α',α'-Tetramethyl-m- oder p-xylylen-diisocyanat
sowie aus diesen Verbindungen bestehende Gemische.

Aromatische Polyisocyanate, wie sie eingehend in den US-Patentschriften 3 984 607 und 4 035 213, der DE-OS 2 402 840 bzw. der DE-AS 2 457 387 beschrieben sind, werden bevorzugt. Besonders bevorzugt sind 2,4'- bzw. 4,4'-Diisocyanato-diphenylmethan, die isomeren Toluylendiisocyanate sowie insbesondere Gemische dieser Diisocyanate.

Als Reaktionspartner für diese Polyisocyanate kommen vor allem Polyhydroxylverbindungen in Frage, die pro Molekül 2 bis 8, vorzugsweise 2 oder 3 Hydroxylgruppen aufweisen und ein (mittleres) Molekulargewicht von bis zu 10 000, vorzugsweise bis zu 6000, aufweisen. Dabei kommen sowohl niedermolekulare Polyhydroxylverbindungen mit Molekulargewichten von 62 bis 499 als auch höhermolekulare Polyhydroxylverbindungen mit mittleren Molekulargewichten von mindestens 500, vorzugsweise von mindestens 1000, in Betracht, wie sie in den obengenannten Publikationen ausführlich beschrieben sind.

Niedermolekulare Polyhydroxylverbindungen ("Kettenverlängerungsmittel") umfassen die verschiedenartigsten Diole, wie beispielsweise
a) Alkandiole wie Ethylenglykol, Propylenglykol-1,3 und Propylenglykol-1,2, Butandiol-1,4, Pentandiol-1,5, Dimethylpropandiol-1,3 und Hexandiol-1,6;
b) Etherdiole wie Diethylenglykol, Triethylenglykol oder 1,4-Phenylen-bis-(β-hydroxyethylether);
c) Esterdiole der allgemeinen Formeln

   HO-(CH₂)ₓ-CO-O-(CH₂)_{y}-OH

   und

   HO-(CH₂)ₓ-O-CO-R-CO-O-(CH₂)ₓ-OH

   in denen
   - R: einen Alkylen- bzw. Arylenrest mit 1 bis 10, vorzugsweise 2 bis 6, C-Atomen,
   - x =: 2 bis 6 und
   - y =: 3 bis 5
   bedeuten,
   z.B. δ-Hydroxybutyl-ε-hydroxy-capronsäureester, ω-Hydroxyhexyl-γ-hydroxybuttersäureester, Adipinsäure-(β-hydroxyethyl)ester und Terephthalsäure- bis(β-hydroxyethyl)ester.

Als "Kettenverlängerungsmittel" können auch Polyamine, vorzugsweise aliphatische oder aromatische Diamine verwendet werden, beispielsweise Ethylendiamin, Propylendiamin-1,2 und -1,3, 1,4-Tetramethylendiamin, 1,6-Hexamethylendiamin, N,N'-Diisobutyl-1,6-hexamethylendiamin, 1,11-Undecamethylendiamin, Cyclohexan-1,3- und -1,4-diamin sowie deren Gemische,
1-Amino-3,3,5-trimethyl-5-aminomethylcyclohexan,
2,4- und 2,6-Hexahydrotoluylendiamin sowie deren Gemische,
Perhydro-2,4'- und 4,4'-diaminodiphenylmethan und dessen 3,3'-Dimethylderivat und Bis-(3-aminopropyl)methylamin;
p-Xylylendiamin, Bisanthranilsäureester gemäß den DE-OS 20 40 644 und 21 60 590, 3,5- und 2,4-Diaminobenzoesäureester gemäß DE-OS 20 25 900, die in den DE-OS 18 03 635, 20 40 650 und 21 60 589 beschriebenen estergruppenhaltigen Diamine, sowie 3,3'-Dichlor-4,4'-diamino-diphenylmethan,Toluylendiamin, 4,4'-Diaminodiphenylmethan und 4,4'-Diaminodiphenyldisulfid.

Als Diamine im Sinne der Erfindung sind auch Hydrazin, Hydrazinhydrat und substituierte Hydrazine zu betrachten, wie z.B.
Methylhydrazin, N,N'-Dimethylhydrazin und deren Homologe sowie Säuredihydrazide, z.B. Carbodihydrazid, Oxalsäuredihydrazid, die Dihydrazide von Malonsäure, Bernsteinsäure, Glutarsäure, Adipinsäure, β-Methyladipinsäure, Sebacinsäure, Hydracrylsäure und Terephthalsäure, Semicarbazido-alkylen-hydrazide, wie z.B. β-Semicarbazidopropionsäurehydrazid (DE-OS 17 70 591), Semicarbazidoalkylencarbazinester, wie z.B. 2-Semicarbazidoethylcarbazinester (DE-OS 19 18 504) oder auch Aminosemicarbazid-Verbindungen, wie z.B. β-Aminoethylsemicarbazido-carbonat (DE-OS 19 02 931).

Höhermolekulare Polyhydroxylverbindungen umfassen die in der Polyurethanchemie an sich bekannten Hydroxypolyester, Hydroxypolyether, Hydroxypolythioether, Hydroxypolyacetale, Hydroxypolycarbonate und/oder Hydroxypolyesteramide, vorzugsweise solche mit mittleren Molekulargewichten von 600 bis 4000, besonders bevorzugt solche mit mittleren Molekulargewichten von 800 bis 2500. Polyetherpolyole und Polyesterpolyole sind besonders bevorzugt.

Besonders bevorzugt sind pro Molekül durchschnittlich 2 bis 3 Hydroxylgruppen aufweisende Propylenoxid-Polyether, die auch Polyethylenoxid-Einheiten enthalten können, sowie unterhalb von 60°C schmelzende Hydroxypolyester mit 2 oder 3 endständigen OH-Gruppen und einem mittleren Molekulargewicht von 1000 bis 6000.

Die in Frage kommenden Hydroxylgruppen aufweisenden Polyester sind z.B. Umsetzungsprodukte von mehrwertigen, vorzugsweise zweiwertigen und gegebenenfalls zusätzlich dreiwertigen Alkoholen mit mehrwertigen, vorzugsweise zweiwertigen, Carbonsäuren. Anstelle der freien Polycarbonsäuren können auch die entsprechenden Polycarbonsäureanhydride oder entsprechende Polycarbonsäureester von niedrigen Alkoholen oder deren Gemische zur Herstellung der Polyester verwendet werden. Die Polycarbonsäuren können aliphatischer, cycloaliphatischer, aromatischer und/oder heterocyclischer Natur sein und gegebenenfalls, z.B. durch Halogenatome, substituiert und/oder ungesättigt sein.

Als Beispiele hierfür seien genannt:
Bernsteinsäure, Adipinsäure, Korksäure, Azelainsäure, Sebacinsäure, Phthalsäure, Isophthalsäure, Trimellitsäure, Phthalsäureanhydrid, Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid, Maleinsäure, Maleinsäureanhydrid, Fumarsäure, dimere und trimere Fettsäuren wie Ölsäure, gegebenenfalls in Mischung mit monomeren Fettsäuren, Terephthalsäuredimethylester, Terephthalsäure-bis-glykolester.

Als mehrwertige Alkohole kommen z.B. Ethylenglykol, Propylenglykol-(1,2) und -(1,3), Butylenglykol-(1,4) und -(2,3), Hexandiol-(1,6), Octandiol-(1,8), Neopentylglykol, Cyclohexandimethanol (1,4-Bis-hydroxymethylcyclohexan), 2-Methyl-1,3-propandiol, Glycerin, Trimethylolpropan, Hexantriol-(1,2,6), Butantriol-(1,2,4), Trimethylolethan, Pentaerythrit, Chinit, Mannit und Sorbit, Methylglykosid, ferner Diethylenglykol, Triethylenglykol, Tetraethylenglykol, Dipropylenglykol, Dibutylenglykol und Polybutylenglykole in Frage.

Besonders bevorzugt sind auch Mischungen der obengenannten Polyetherpolyole mit Polyesterpolyolen mit mittleren Molekulargewichten von 1000 bis 3000 aus Adipinsäure, Hexandiol-1,6 und Neopentylglykol.

Bei der Herstellung der NCO-Präpolymerisate können gegebenenfalls auch niedermolekulare Polyole mit einem Molekulargewicht von weniger als etwa 300 mitverwendet werden, wie sie als Kettenverlängerungsmittel an sich bekannt sind. Bevorzugt sind in diesem Zusammenhang Butandiol-1,4 und Trimethylolpropan.

Die Herstellung der blockierten NCO-Präpolymerisate kann in an sich bekannter Weise erfolgen, indem man die genannten Polyhydroxylverbindungen mit überschüssigem Diisocyanat, vorzugsweise bei ca. 70 bis 100°C umsetzt. Man wählt hierbei im allgemeinen ein NCO/OH-Verhältnis von 1,5:1 bis 6,0:1, vorzugsweise von 1,7:1 bis 2,5:1.

Als Blockierungsmittel für die NCO-Präpolymerisate kommen z.B. Ketoxime aus Hydroxylamin und Ketonen wie Aceton, Methylethylketon, Diethylketon, Cyclohexanon, Acetophenon und Benzophenon in Frage. Bevorzugtes Blockierungsmittel ist Methylethylketoxim (= Butanonoxim).

Aber auch andere Blockierungsmittel, wie sie z.B. in "Methoden der Organischen Chemie", (Houben-Weyl), Bd. 14/2, 4.Aufl., Georg Thieme Verlag, Stuttgart 1963, S. 61 ff., beschrieben werden, sind prinzipiell geeignet.

Die Blockierungsreaktion kann in der Weise durchgeführt werden, daß man das NCO-Präpolymerisat mit äquivalenten Mengen an Blockierungsmittel bei erhöhter Temperatur, z.B. 70 bis 100°C, bis zum Verschwinden der NCO-Gruppe umsetzt.

Solche blockierten NCO-Präpolymerisate sind beispielsweise in der DE-OS 29 02 090 beschrieben.

Die blockierten Präpolymerisate können zwecks Einstellung einer optimalen Viskosität mit organischen Lösungsmitteln gemischt werden. Infolge der Blockierung der NCO-Gruppen müssen hierbei nicht unbedingt gegenüber freien NCO-Gruppen inerte Lösungsmittel eingesetzt werden. Beispielsweise können Alkohole wie Isopropanol, Ether wie Ethylenglykolmonomethyl- und -monoethylether, Ester wie Essigsäureethyl- und -butylester sowie die Essigsäureester von Ethylenglykolmonomethyl- und -monoethylether, Ketone wie Methylethylketon, Cyclohexanon, und Amide wie N,N-Dimethylformamid, N,N-Dimethylacetamid, N-Methylpyrrolidon verwendet werden.

Als Vernetzerkomponente für die blockierten NCO-Präpolymerisate können im Prinzip alle polyfunktionellen Verbindungen, die mit den blockierten Isocyanatgruppen (nach deren Deblockierung) zu reagieren vermögen, im Prinzip also vor allem Polyamine, vorzugsweise Diamine, wie die oben als Kettenverlängerungsmittel beschriebenen Diamine, verwendet werden. Geeignet ist u.a. auch Isophorondiamin. Vorzugsweise wird 4,4'-Diamino-3,3'-dimethyl-dicyclohexylmethan, ein bei Raumtemperatur flüssiges, aliphatisches Diamin mit sehr geringem Dampfdruck, verwendet.

Die Vermischung der blockierten NCO-Präpolymerisate mit dem Vernetzer erfolgt im allgemeinen etwa im Verhältnis der Äquivalentgewichte dieser Komponenten, obwohl für einige Anwendungszwecke auch eine Untervernetzung zweckmäßig ist, so daß das Äquivalentverhältnis von blockiertem NCO zu vernetzender Gruppe - vorzugsweise also zu NH₂ - im allgemeinen zwischen 1,35:1 und 0,95:1, bevorzugt 1,25:1 bis 1:1, liegt.

Gemeinsam ist den Untergruppen der Komponente A die Fähigkeit zur Filmbildung zueigen.

Insbesondere bei den Komponenten (A2) empfiehlt es sich, sie in einem organischen Lösungsmittel zu lösen, sofern sie nicht sowieso schon in einem solchen Lösungsmittel hergestellt worden sind. Diese Lösungen können zwischen 10 und 95, vorzugsweise zwischen 20 und 50 Gew.-% Festkörpergehalt besitzen. Hohe Festkörpergehalte sind vor allem bei Einsatz von Präpolymerisaten (A2) möglich. Geeignete Lösungsmittel umfassen Aromaten wie Toluol, Xylole und die oben für die blockierten Präpolymerisate aufgezählten Lösungsmittel.

Ionische Gruppen für die Komponente B umfassen die Alkali- und Ammoniumcarboxylat- und -sulfonatgruppen, potentiell ionische Gruppen die Carboxyl- und die Sulfogruppe. Geeignete Einbaukomponenten für das Einbringen dieser Gruppen in die Komponente B umfassen demzufolge z.B. Dihydroxycarbonsäuren, Diaminocarbonsäuren, Dihydroxyalkylsulfonsäuren sowie Diaminoalkylsulfonsäuren und ihre Salze wie z.B. Dimethylolpropionsäure, Ethylendiamin-β-ethyl-sulfonsäure, Ethylendiamin-propyl- oder -butylsulfonsäure, 1,2- oder 1,3-Propylendiamin-β-ethylsulfonsäure, Lysin, 3,5-Diaminobenzoesäure und deren Alkali- und/oder Ammoniumsalze; das Addukt von Natriumbisulfit an Buten-2-diol-1,4.

Die Herstellung der Komponente B kann nach den an sich bekannten Methoden der Polyurethanchemie sowohl nach dem Einstufen- als auch dem Zweistufen-Verfahren (Präpolymerisat-Verfahren) erfolgen.

Die Komponente B wird also im wesentlichen aus aliphatischen, cycloaliphatischen und/oder aromatischen Polyisocyanaten einerseits und Diolen, Diaminen und/oder Hydrazin andererseits unter Mitverwendung der Aufbaukomponenten hergestellt, die die ionischen Gruppen bzw. die potentiell ionischen Gruppen für Komponente B liefern, in Komponente A hergestellt. Dies kann beispielsweise folgendermaßen geschehen:
Zunächst werden eine oder mehrere Aminogruppen enthaltende Verbindungen in der Komponente A gelöst. Hierbei kann es sich sowohl um Diamine wie etwa Ethylendiamin, Hexamethylendiamin, Isophorondiamin, 4,4'-Diaminodicyclohexylmethan, 4,4'-Diamino-3,3'-dimethyldicyclohexylmethan, handeln. Ebenfalls eingesetzt werden können Hydrazinhydrat und seine Abkömmlinge wie Carbodihydrazid oder Semicarbazidpropionsäurehydrazid. Bevorzugt ist jedoch Hydrazinhydrat.

Die Komponente B wird nun in situ erzeugt, indem man zu den in der Komponente A gelösten Aminogruppen enthaltenden Verbindungen in vorzugsweise äquivalenter Menge Polyisocyanate hinzufügt, wobei ein fester Polyharnstoff also disperse Phase entsteht. Als Polyisocyanate kommen dabei die oben für die Herstellung der Komponente A2 beschriebenen Verbindungen in Frage.

Die OH-funktionellen Bestandteile sollten bevorzugt vor dem Einsatz bereits mit Isocyanatkomponenten in NCO-Präpolymerisate überführt werden, um so eine kurze Reaktionszeit mit den eingesetzten aminischen Komponenten zu gewährleisten.

Als Isocyanatkomponenten für die Herstellung der Komponente B eignen sich die oben für die Herstellung der Komponente A als geeignet beschriebenen Polyisocyanate. Als OH-funktionelle Bestandteile für die Herstellung der Komponente B eignen sich die oben für die Herstellung der Komponente A beschriebenen mehrwertigen Alkolole, sofern sie nicht mehr als 2 Ethoxygruppen pro Molekül enthalten, also z.B. Ethylenglykol, Propylenglykol-(1,2) und -(1,3), Butylenglykol-(1,4) und -(2,3), Hexandiol-(1,6), Octandiol-(1,8), Neopentylglykol, Cyclohexandimethanol (1,4-Bis-hydroxymethylcyclohexan), 2-Methyl-1,3-propandiol, Butantriol-(1,2,4), Trimethylolethan, Pentaerythrit, Chinit, Mannit und Sorbit, Methylglykosid, ferner Diethylenglykol. Zu den OH-funktionellen Bestandteilen für die Herstellung der Komponente B zählen auch die Ausgangsprodukte, die die ionischen bzw. die potentiell ionischen Gruppen liefern.

Wesentlich für das erfindungsgemäße Verfahren ist die Viskosität der Komponente A. Liegt diese unterhalb von 2000 mPa.s, so ist eine langfristig stabile Verteilung der dispersen Komponente B nicht mehr gewährleistet. Es kommt vielmehr zum Absetzen des Festkörpers, das gelegentlich irreversibel sein kann, auf jeden Fall aber ein Neuverteilen durch Aufrühren nötig macht. Eine Viskosität über 100 000 mPa.s führt dagegen zu Schwierigkeiten beim Einarbeiten der zur Bildung der Komponente B benötigten Bestandteile. Daneben führt die Bildung größerer Mengen der Komponente B zu weiterer Erhöhung der Viskosität, was die Verarbeitung des Beschichtungsmittels zunehmend erschwert.

Sofern als Komponente A1 hydroxylgruppenhaltige Polymere (z.B. hydroxylgruppenhaltige Poly(meth)acrylate) verwendet werden, kann man diese auf dem Substrat noch vernetzen, wenn man dem Beschichtungsmittel eine wirksame Menge Vernetzer zusetzt. Als solche sind beispielsweise gegebenenfalls blockierte Polyisocyanate oder Aminoplastharze geeignet. Als Aminoplastharze sind beispielsweise Melamin/Formaldehyd- oder Harnstoff/Formaldehyd-Kondensationsprodukte anzusehen. Melaminharze sind alle herkömmlichen nicht veretherten oder mit gesättigten Monoalkoholen mit 1 bis 4 C-Atomen veretherten Melamin/Formaldehyd-Kondensate, wie sie z.B. in der FR-PS 943 411 oder bei D.H. Solomon, The Chemistry of Organic Filmformers, 235-240, John Wiley & Sons, Inc., New York, 1967, beschrieben sind. Die Melaminharze können jedoch auch ganz oder teilweise durch andere vernetzende Aminoplasten, wie sie z.B. in "Methoden der Organischen Chemie" (Houben-Weyl), Bd. 14/2 Teil 2, 4.Aufl., Georg Thieme Verlag, Stuttgart, 1963, 319 ff. beschrieben sind, ersetzt werden.

Bei der Verwendung von Polyisocyanat-Vernetzern wählt man ein OH/NCO-Äquivalentverhältnis im allgemeinen von 1:0,8 bis 1:1,2; bei der Verwendung von Aminoplastharzen als Vernetzer wird in der Regel ein Gewichtsverhältnis OH-Polymer/Aminoplastharz von 65:35 bis 95:5 verwendet.

Weiterer Gegenstand der Erfindung sind die nach dem erfindungsgemäßen Verfahren erhältlichen Beschichtungsmittel.

Die erfindungsgemäßen Beschichtungsmittel können insbesondere zur Beschichtung von Textilien, vor allem von textilen Flächengebilden, und von Leder verwendet werden. Dementsprechend ist weiterer Gegenstand der Erfindung die Verwendung der erfindungsgemäßen Beschichtungsmittel zur Beschichtung von Textilien und Leder.

Mit den erfindungsgemäßen Beschichtungsmitteln können wasserdampfdurchlässige Beschichtungen auf den in der Praxis üblichen Beschichtungsanlagen sowohl nach dem Direkt- als auch nach dem Umkehrbeschichtungsverfahren hergestellt werden. Hierbei ist es möglich, in Abhängigkeit von dem jeweiligen spezifischen chemischen Aufbau des Polymeren eigenschaftsmäßig verschiedene Schichten, wie z.B. Haft-, Zwischen- oder Deckschichten, zu erzeugen.

Zur Herstellung einer Umkehrbeschichtung aus den erfindungsgemäßen Beschichtungsmitteln trägt man z.B. zuerst auf einen geeigneten Zwischenträger, z.B. ein Trennpapier, das Material für den Deckstrich in einer Menge von ca. 20 bis 100 g/m² auf, härtet im Trockenkanal aus, bringt auf den trockenen Deckstrich das erfindungsgemäße Beschichtungsmittel für den Haftstrich ebenfalls in einer Menge von 20 bis 100 g/m² auf, kaschiert das Substrat hinzu, trocknet bzw. härtet die Beschichtung in einem weiteren Trockenkanal bei ca. 120 bis 190°C, vorzugsweise 150 bis 160°C, und zieht das beschichtete Substrat vom Trennträger ab.

Selbstverständlich ist es auch möglich, nur den Deck- oder den Haftstrich aus den erfindungsgemäßen Beschichtungsmitteln zu erzeugen und für den anderen Strich ein konventionelles Beschichtungsmittel oder ein andersartiges wasserdampfdurchlässiges Beschichtungssystem einzusetzen.

Wie schon erwähnt, können die erfindungsgemäßen Beschichtungsmittel auch im Direktstreichverfahren unmittelbar auf das textile Substrat aufgebracht werden.

Die erfindungsgemäßen Beschichtungsmittel können auch mit 1- oder 2-Komponenten-PUR in Lösung oder Dispersion (siehe z.B. DE-OS 2 457 387 und DE-OS 3 134 161) verschnitten werden Die hierzu verwendeten PUR können hydrophob oder hydrophil sein.

Werden aus den erfindungsgemäßen Beschichtungsmitteln Zwischenschichten hergestellt, dann setzt man ihnen gegebenenfalls beim Erhitzen Gase abspaltende Verbindungen als Treibmittel sowie zweckmäßigerweise auch Schaumstabilisatoren zu. Geeignete Zusätze werden z.B. in DE-OS 1 794 006 (GB-PS 1 211 339) sowie in US-PS 3 262 805 beschrieben.

Die Vorteile der vorliegenden Erfindung können, wie folgt, zusammengefaßt werden:
hohe Wasserdampfdurchlässigkeit, gemessen nach der Methode der British Textile Technology Group (BTTG);
hohe Wasserdichte der beschichteten Artikel am Original, nach Waschen und/oder Chemischreinigung;
hervorragende "Tropfenfestigkeit", d.h. beim Auflegen von Wassertropfen auf die Beschichtung tritt keine "pustelartige" Quellung auf;
geringer Abrieb der kompakten Beschichtungsoberfläche;
Wegfall umweltbelastender Fällbadflüssigkeiten wie etwa bei der Koagulation von DMF-Lösungen in Wasser;
normale Streich-, Rakel- und Trockentechnik im Gegensatz zu den diffizilen Streich- und Trockenbedingungen bei der Herstellung wasserdampfdurchlässiger, mikroporöser Schichten nach dem Verfahren der Verdampfungskoagulation.

Der Begriff "keine nennenswerten Mengen" in der Definition der Komponente A bedeutet "praktisch keine" in dem Sinne, daß lediglich solche Mengen zugelassen sind, die bei fachgerechter Arbeitsweise als Endgruppen zwangsläufig entstehen.

Der Begriff "mittleres Molekulargewicht" im Sinne dieser Erfindung bezieht sich auf das Zahlenmittel.

In den nachfolgenden Beispielen genannte Teile sind Gewichtsteile; Prozentangaben beziehen sich, sofern nicht anders angegeben, auf das Gewicht.

### Beispiele

Die für die nachfolgenden Ausgangsprodukte angegebenen Verhältnisse sind Molverhältnisse.

Folgende Produkte werden mitverwendet:

### Präpolymerisat 1:

Ein mit Butanonoxim blockiertes verzweigtes NCO-Präpolymerisat aus MDI und TDI (1:1), einem trifunktionellen Propylenoxid-Polyether mit einem mittleren Molekulargewicht von ca. 6000 und einem difunktionellen Propylenoxid-Polyether mit einem mittleren Molekulargewicht von ca. 600.

### Präpolymerisat 2:

Ein mit Butanonoxim blockiertes NCO-Präpolymerisat aus MDI, einem difunktionellen Propylenoxid-Polyether mit einem mittleren Molekulargewicht von ca. 2000, einem trifunktionellen Propylenoxid-Polyether mit einem mittleren Molekulargewicht von ca. 3000 und einem Adipinsäure/Hexandiol-1,6/Neopentylglykol-Polyester (Hexandiol-1,6/Neopentylglykol = 2:1) mit einem mittleren Molekulargewicht von ca. 2000.

### Polyacrylatlösung 3:

40 %ige Lösung eines Polyacrylats aus Acrylsäureethylester, Acrylsäure und Methacrylsäurehydroxypropylester (95:2,5:2,5) in Ethylacetat.

### Polyurethanlösung 4:

30 %ige Lösung eines Polyurethans aus MDI, Tetraethylenglykol/Hexandiol-1,6-Polycarbonat (Tetraethylenglykol/Hexandiol-1,6 = 2:3) mit einem mittleren Molekulargewicht von ca. 2000, einem difunktionellen Ethylenoxid/Propylenoxid(1:1)-Polyether und Butandiol-1,4 in Dimethylformamid und Toluol.

### Polyurethanharnstofflösung 5:

30 %ige Lösung eines Polyurethanharnstoffs aus IPDI und HDI (2:1), Tetraethylenglykol/Hexandiol-1,6-(2:3)Polycarbonat mit einem mittleren Molekulargewicht von ca. 2000, Isophorondiamin und Hydrazin in Toluol, Isopropanol und Methoxypropanol.

### Beispiel 1

612,2 Teile des blockierten Präpolymerisats 1 werden bei Raumtemperatur mit 8,75 Teilen Hydrazinhydrat und 73,85 Teilen einer 45 %igen wäßrigen Lösung des Natriumsalzes der 2-(2-Aminoethyl-)aminoethansulfonsäure vermischt. Zu dieser Mischung werden bei Raumtemperatur unter gutem Rühren langsam 77,7 Teile Isophorondiisocyanat getropft. Die klare Mischung trübt sich im Laufe der Zugabe ein. Nach 2-stündigem Nachrühren ist der Isocyanatgehalt (IR-spektroskopisch bestimmt) auf Null gefallen. Man erhält eine stabile weiße Dispersion mit einem Gehalt an hydrophilem Polyharnstoff von 13,8 % im blockierten NCO-Präpolymerisat.

### Beispiel 2

In 612,2 Teilen blockiertem Präpolymerisat 1 wird, wie in Beispiel 1 beschrieben, ein hydrophiler Polyharnstoff aus 10,2 Teilen Hydrazinhydrat, 38,8 Teilen des in Beispiel 1 beschriebenen, in Wasser gelösten Natriumsalzes und 71 Teilen eines Gemisches aus 80 % 2,4- und 20 % 2,6-Diisocyanatotoluol hergestellt. Die erhaltene weiße Dispersion enthält 13,4 % hydrophilen Harnstoff.

Die Dispersionen der Beispiele 1 und 2 sowie Präpolymerisat 1 werden mit den in Tabelle 1 angegebenen Mengen 3,3'-Dimethyl-4,4'-diaminodicyclohexylmethan vermischt und mit Hilfe eines Rakelmessers auf ein silikonisiertes Trennpapier aufgetragen. Nach einer Wärmebehandlung (160°C/5 Minuten) im Trockenkanal sind die Filme ausgehärtet und lassen sich vom Trennträger abziehen. Sie besitzen die in der Tabelle 1 angegebenen Auflagen.

Die Wasserdampfdurchlässigkeiten werden nach den Maßgaben gemessen, wie sie in der Druckschrift DS 2109 TM 1 der British Textile Technology Group, Manchester, England niedergelegt sind.

**Tabelle 1**

| | (Teile) | Diamin (Teile) | Auflage (g/m²) | Wasserdampfdurchlässigkeit (g/m²d) |
|---|---|---|---|---|
| Präpolymerisat 1 | 100 | 6,2 | 39 | 1800 |
| | 100 | 6,2 | 63 | 1300 |
| Beispiel 1 | 100 | 5,3 | 39 | 3100 |
| | 100 | 5,3 | 63 | 2100 |
| Beispiel 2 | 100 | 5,3 | 32 | 2900 |
| | 100 | 5,3 | 61 | 1700 |

### Beispiel 3

In der in Beispiel 1 beschriebenen Weise wird in 500 Teilen des blockierten Präpolymerisats 2 aus 3,4 Teilen Hydrazinhydrat, 85 Teilen der 45 %igen wäßrigen Lösung des Natriumsalzes der 2-(2- Aminoethyl)-aminoethansulfonsäure und 60 Teilen Isophorondiisocyanat, gelöst in 60 Teilen Methoxyethylacetat, ein in stabiler Dispersion vorliegender Festkörper erzeugt. Nach Beendigung der Reaktion werden 13 g Butanonoxim zum Reaktionsprodukt hinzugefügt und verrührt. Die Dispersion enthält 13,9 % des hydrophilen Polyharnstoffs.

### Beispiel 4

Wie in Beispiel 3 beschrieben wird in 500 Teilen des blockierten Präpolymerisats 2 aus 3,4 Teilen Hydrazinhydrat, 85 Teilen der 45 %igen wäßrigen Lösung des Natriumsalzes und 47 Teilen eines Gemisches aus 80 % 2,4- und 20 % 2,6-Diisocyanatotoluol, gelöst in 60 Teilen Methoxyethylacetat, ein in stabiler Dispersion vorliegender Festkörper erzeugt. Die erhaltene weiße Dispersion enthält 12,6 % hydrophilen Polyharnstoff.

Wie im Anschluß an Beispiel 2 beschrieben, werden aus den Dispersionen der Beispiele 3 und 4 sowie aus Präpolymerisat 2 freitragende Filme erzeugt, deren Wasserdampfdurchlässigkeit bestimmt wird.

Die charakteristischen Daten der Filme sowie die Meßergebnisse sind in Tabelle 2 zusammengefaßt.

**Tabelle 2**

| | (Teile) | Diamin (Teile) | Auflage (g/m²) | Wasserdampfdurchlässigkeit (g/m²d) |
|---|---|---|---|---|
| Präpolymerisat 2 | 100 | 8,0 | 34 | 1050 |
| Beispiel 3 | 100 | 7,4 | 36 | 1400 |
| Beispiel 4 | 100 | 7,4 | 34 | 1500 |

### Beispiel 5

In der im Beispiel 1 beschriebenen Weise wird in 500 Teilen Polyurethanharnstofflösung 5 aus 1 Teil Hydrazinhydrat, 25,1 Teilen der 45 %igen wäßrigen Lösung des Natriumsalzes der 2-(2-Aminoethyl)-aminoethansulfonsäure und 17,7 Teilen Isophorondiisocyanat, gelöst in 20 Teilen Toluol, ein in stabiler Dispersion vorliegender Festkörper erzeugt. Die Dispersion enthält 5,26 % des hydrophilen Harnstoffs.

### Beispiel 6

Wie in Beispiel 5 beschrieben wird in 500 Teilen Polyurethanharnstofflösung 5 aus 1,5 Teilen Hydrazinhydrat, 28,2 Teilen der 45 %igen wäßrigen Lösung des Natriumsalzes und 15,8 Teilen 4,4'-Diisocyanatodicyclohexylmethan, gelöst in 16 Teilen Toluol, ein in stabiler Dispersion vorliegender Festkörper erzeugt. Die erhaltene Dispersion enthält 5,25 % des hydrophilen Polyharnstoffs.

Aus den Dispersionen der Beispiele 5 und 6 sowie aus Polyurethanharnstofflösung 5 werden durch Ausstreichen mittels eines Rakelmessers auf ein Trennpapier und anschließendes Trocknen (3 Minuten/160°C) und Ablösen vom Trennträger freitragende Filme erzeugt. Wie im Anschluß an Beispiel 2 beschrieben, werden die Wasserdampfdurchlässigkeiten der Filme bestimmt. Die charakteristischen Daten der Filme und die Meßergebnisse sind in der Tabelle 3 zusammengefaßt.

**Tabelle 3**

| | Auflage (g/m²) | Wasserdampfdurchlässigkeit (g/m²d) |
|---|---|---|
| Polyurethanharnstofflösung 5 | 61 | 1715 |
| Beispiel 5 | 65 | 3155 |
| Beispiel 6 | 66 | 4450 |

### Beispiel 7

In der in Beispiel 1 beschriebenen Weise wird in 400 Teilen Polyurethanlösung 4 aus 2,8 Teilen Hydrazinhydrat, 23,1 Teilen der 45 %igen wäßrigen Lösung des Natriumsalzes der 2-(2-Aminoethyl)-aminoethansulfonsäure und 19,2 Teilen Isophorondiisocyanat ein in stabiler Dispersion vorliegender Festkörper erzeugt. Die erhaltene Dispersion enthält 7,1 % des hydrophilen Polyharnstoffs.

### Beispiel 8

Wie in Beispiel 7 beschrieben wird in 500 Teilen Polyurethanlösung 4 aus 2,63 Teilen Hydrazinhydrat, 21,7 Teilen der 45 %igen wäßrigen Lösung des Natriumsalzes und 17,0 Teilen 1,6-Diisocyanatohexan, gelöst in 20 Teilen Toluol, ein in stabiler Dispersion vorliegender Festkörper erzeugt. Die erhaltene Dispersion enthält 5,1 % des hydrophilen Harnstoffs.

### Beispiel 9

Wie in Beispiel 7 beschrieben, wird in 500 Teilen Polyurethanlösung 4 aus 1,14 Teilen Hydrazinhydrat, 28,9 Teilen der 45 %igen wäßrigen Lösung des Natriumsalzes und 15,9 Teilen eines Gemisches aus 80 % 2,4- und 20 % 2,6-Diisocyanatotoluol, gelöst in 16 Teilen Toluol, ein in stabiler Dispersion vorliegender Feststoff erzeugt. Die erhaltene Dispersion enthält 5,3 % des hydrophilen Polyharnstoffs.

### Beispiel 10

Wie in Beispiel 7 beschrieben wird in 500 Teilen Polyurethanlösung 4 aus 1,51 Teilen Hydrazinhydrat, 28,2 Teilen der 45 %igen wäßrigen Lösung des Natriumsalzes und 15,8 Teilen 4,4'-Diisocyanatodicyclohexylmethan, gelöst in 16 Teilen Toluol, ein in stabiler Dispersion vorliegender Feststoff erzeugt. Die erhaltene Dispersion enthält 5,3 % des hydrophilen Polyharnstoffs.

Wie im Anschluß an Beispiel 6 beschrieben, werden aus den Dispersionen der Beispiele 7 bis 10 sowie aus der Polyurethanlösung 4 freitragende Filme erzeugt und deren Wasserdampfdurchlässigkeit gemessen. Die charakteristischen Daten der Filme sowie die Meßergebnisse sind in der Tabelle 4 zusammengefaßt.

**Tabelle 4**

| | Auflage (g/m²) | Wasserdampfdurchlässigkeit (g/m²d) |
|---|---|---|
| Polyurethanlösung 4 | 24 | 3200 |
| Beispiel 7 | 29 | 5900 |
| Beispiel 8 | 23 | 6200 |
| Beispiel 9 | 28 | 5700 |
| Beispiel 10 | 22 | 6800 |

### Beispiel 11

In der in Beispiel 1 beschriebenen Weise wird in 300 Teilen Polyacrylatlösung 3 aus 2,1 Teilen Hydrazinhydrat, 17,3 Teilen der 45 %igen wäßrigen Lösung des Natriumsalzes der 2-(2-Aminoethyl)-aminoethansulfonsäure und 21,2 Teile 4,4'-Diisocyanatodicyclohexylmethan, gelöst in 120 Teilen Aceton, ein in stabiler Dispersion vorliegender Festkörper erzeugt. Die erhaltene Dispersion enthält 5,8 % des hydrophilen Harnstoffs.

### Beispiel 12

Wie in Beispiel 11 beschrieben, wird in 300 Teilen Polyacrylatlösung 3 aus 2,1 Teilen Hydrazin, 17,3 Teilen der 45 %igen wäßrigen Lösung des Natriumsalzes, vermischt mit 60 Teilen Wasser und 4,2 Teilen Triethylamin, und 13,6 Teilen 1,6-Diisocyanatohexan, gelöst in 120 Teilen Aceton, ein in stabiler Dispersion vorliegender Festkörper erzeugt. Die erhaltene Dispersion enthält 4,4 % des hydrophilen Harnstoffs.

### Beispiel 13

Wie in Beispiel 11 beschrieben wird in 300 Teilen Polyacrylatlösung 3 aus 2,1 Teilen Hydrazinhydrat, 17,3 Teilen der 45 %igen wäßrigen Lösung des Natriumsalzes, vermischt mit 4,2 Teilen Triethylamin und 14,4 Teilen Isophorondiisocyanat, gelöst in 120 Teilen Essigsäureethylester, ein in stabiler Dispersion vorliegender Festkörper erzeugt. Die erhaltene Dispersion enthält 5,1 % des hydrophilen Harnstoffs.

Wie im Anschluß an Beispiel 6 beschrieben, werden aus den Dispersionen der Beispiele 11 bis 13 sowie aus Polyacrylatlösung 3 freitragende Filme erzeugt und deren Wasserdampfdurchlässigkeit gemessen. Die charakteristischen Daten der Filme sowie die Meßergebnisse sind in der Tabelle 5 zusammengefaßt.

**Tabelle 5**

| | Auflage (g/m²) | Wasserdampfdurchlässigkeit (g/m²d) |
|---|---|---|
| Polyacrylatlösung 3 | 29 | 3000 |
| Beispiel 11 | 32 | 6200 |
| Beispiel 12 | 24 | 5800 |
| Beispiel 13 | 29 | 6000 |

## Patentansprüche

1. Verfahren zur Herstellung von Beschichtungsmitteln aus
A) 70 bis 98 Gew.-%,
a) bezogen auf die Summe (A + B), hydrophobes Polymer, ausgewählt aus der Reihe
(1) Polymerisat aus ethylenisch ungesättigten Monomeren,
(2) Polyurethan oder blockiertes NCO-Präpolymerisat und gegebenenfalls
b) organischem Lösungsmittel,
wobei die Komponente A keine freien Isocyanatgruppen und keine nennenswerten Mengen solcher Gruppen enthält, die zur Umsetzung mit Komponente B oder ihren Ausgangsprodukten im Reaktionsgemisch befähigt sind, und wobei weiterhin die Viskosität der Komponente A 2000 bis 100 000 mPa.s (gemessen bei 23°C) und das Gewichtsverhältnis a:b 100:0 bis 5:95 betragen,
B) 2 bis 30 Gew.-%, bezogen auf die Summe (A+B), in A dispergiertem Polyadditionsprodukt, ausgewählt aus der Reihe (i) Polyurethan, (ii) Polyurethanharnstoff und (iii) Polyharnstoff, wobei die Komponente B praktisch keine freien Isocyanat-, Hydroxyl- und Aminogruppen, aber hydrophile Gruppen, ausgewählt aus ionischen Gruppen und potentiell ionischen Gruppen in einer Menge entsprechend 0,5 bis 20 Milliäquivalent pro 100 g der Komponente B enthält, und gegebenenfalls
C) Vernetzer,
dadurch gekennzeichnet, daß man die Komponente B in Komponente A erzeugt.

2. Verfahren nach Anspruch 1 zur Herstellung von Beschichtungsmitteln aus
80 bis 96 Gew.-% A und
20 bis 4 Gew.-% B.

3. Verfahren nach Anspruch 1, wobei die Viskosität der Komponente A 5.000 bis 70.000 mPa.s beträgt.

4. Verfahren nach Anspruch 1, wobei die Viskosität der Komponente A 10.000 bis 50.000 mPa.s beträgt.

5. Verfahren nach Anspruch 1, wobei die Komponente B ionische Gruppen und/oder potentiell ionische Gruppen in einer Menge entsprechend 1 bis 14 Milliäuquivalent pro 100 g der Komponente B enthält.

6. Verwendung der Beschichtungsmittel erhältlich nach einem der Ansprüche 1 bis 5 zur Beschichtung von Textilien und Leder.

## Claims

1. Process for the preparation of coating compositions comprising
A) from 70 to 98% by weight,
a) based on the sum (A + B), of hydrophobic polymer selected from the series consisting of
(1) polymer comprising ethylenically unsaturated monomers,
(2) polyurethane or block NCO prepolymer and, if desired,
b) organic solvent,
component A containing no free isocyanate groups and no notable quantities of groups which are capable of reaction with component B or its precursors in the reaction mixture, and in addition the viscosity of component A being from 2000 to 100,000 mPa.s (measured at 23°C) and the weight ratio a:b being from 100:0 to 5:95,
B) from 2 to 30% by weight, based on the sum (A+B), of a polyaddition production dispersed in A selected from the series consisting of (i) polyurethane, (ii) polyurethane-urea and (iii) polyurea, component B containing virtually no free isocyanate, hydroxyl and amino groups, but containing hydrophilic groups selected from ionic groups and potentially ionic groups in a quantity corresponding to from 0.5 to 20 milliequivalents per 100 g of component B, and, if desired,
C) crosslinking agents,
characterized in that component B is produced in component A.

2. Process according to Claim 1, for the preparation of coating compositions comprising
from 80 to 96% by weight of A and
from 20 to 4% by weight of B.

3. Process according to Claim 1, the viscosity of component A being from 5000 to 70,000 mPa.s.

4. Process according to Claim 1, the viscosity of component A being from 10,000 to 50,000 mPa.s.

5. Process according to Claim 1, component B containing ionic groups and/or potentially ionic groups in a quantity corresponding to from 1 to 40 milliequivalents per 100 g of component B.

6. Use of the coating compositions obtainable according to one of Claims 1 to 5 for the coating of textiles and leather.

## Revendications

1. Procédé pour la préparation d'agents d'enduction constitués par
A) de 70 à 98% en poids,
a) rapportés à la somme (A+B), d'un polymère hydrophobe choisi parmi le groupe comprenant
(1) un polymère obtenu à partir de monomères à insaturation éthylénique,
(2) du polyuréthanne ou un prépolymère NCO bloqué, et éventuellement
b) un solvant organique,
dans lesquels le composant A ne contient, ni des groupes isocyanate libres, ni des quantités appréciables de groupes qui sont aptes à réagir avec le composant B ou avec ses produits de départ dans le mélange réactionnel, et dans lesquels, en outre, la viscosité du composant A s'élève de 2000 à 100.000 mPa.s (mesurée à 23°C), le rapport pondéral a:b s'élevant de 100:0 à 5:95,
B) de 2 à 30% en poids, rapportés à la somme (A+B), d'un produit de polyaddition dispersé dans A, choisi parmi le groupe comprenant (i) le polyuréthanne, (ii) la polyuréthanne-urée et (iii) la polyurée, dans lesquels le composant B ne contient pratiquement pas de groupes isocyanate, hydroxyle et amino libres, mais bien des groupes hydrophiles choisis parmi des groupes ioniques et des groupes potentiellement ioniques, en une quantité correspondant à 0,5-20 milliéquivalents par 100 g du composant B, et éventuellement
C) un agent de réticulation,
caractérisé en ce qu'on obtient le composant B dans le composant A.

2. Procédé selon la revendication 1, pour la préparation d'agents d'enduction avec
80 - 96% en poids de A et
20 - 4% en poids de B.

3. Procédé selon la revendication 1, dans lequel la viscosité du composant A s'élève de 5.000 à 70.000 mPa.s.

4. Procédé selon la revendication 1, dans lequel la viscosité du composant A s'élève de 10.000 à 50.000 mPa.s.

5. Procédé selon la revendication 1, dans lequel le composant B contient des groupes ioniques et/ou des groupes potentiellement ioniques en une quantité correspondant à 1-14 milliéquivalents par 100 g du composant B.

6. Utilisation des agents d'enduction obtenu selon un des revendications 1 à 5 pour l'enduction de textiles et de cuirs.
